# EUROPEAN PATENT APPLICATION

(11) **EP 0 944 282 A2**
(43) Date of publication of application: **22.09.1999**
(21) Application number: 98500260.9
(22) Date of filing: 01.12.1998
(51) Int. Cl.: H04Q 11/04

(54) **Basic access unit to an integrated services digital network**

(30) Priority: 20.03.1998 ES 9800600
(71) Applicant: TELEFONICA DE ESPANA, S.A., 28013 Madrid (ES)
(72) Inventor: Cuellar Del Rio, José Maria, 28020 Madrid (ES)
(74) Representative: Sanchez del Campo Gonzalez de Ubierna, Ramon

(57) **Abstract**

A unity of basic access to a digital network of integrated services, the function of which is to generate a timing of an only link -access-equipment unity-, starting from the timing of any basic access by means of a digital PLL implemented in a LCA, the data clock of the link -access-wquipment unity- being derived from the data clock of one out of the external basic access, the call condition of the access being used as a reference to derive the link clock to 2048 Kbit/s, unity de access-equipment, being monitored all the time, by means of the flag information of channel D, which allows the basic access condition to be known at any time.

## Description

### BACKGROUND OF THE INVENTION

The present specification refers to an application for a Patent of Invention, referring to a unity of basic access to a digital network of integrated services, the function of which is to maintain a communication in a multimedia conference among six different persons, physically located in different countries, independently of the fact that if the person the connection of whom has been taken as a reference of timing hangs up or it has problems with the telephone exchange, it allows, independently of the fact to be produced, to - maintain both the display and listening of the conference among the rest of the participants.

### FIELD OF THE INVENTION

This invention will find application in the industry of telecommunications.

### RELATED ART

Up to recently, the equipments used for multimedia multipoint conferences, consisted of a unity of primary access DNIS (Digital Network of Integrated Services), i.e., a Network evolving starting from the telephone network, and permiting a digital connectivity from user to user, providing telephone services et non-telephone services among same, being fitted with a powerful flag, allowing it to integrate services until now sent thru other specific networks (data, telephone, etc), which involved, and it involves, a high cost to the user, to such un extent that only the firms having a high economic potential could apply for this service.

The primary access allows for 30 "B" channels, i.e. each of the two cannels that, in a primary or basic access of the above mentioned DNIS, contains a useful information at 64 Kbit/s, each "B" channel being capable of being addressed to a different destination (i.e., user), supporting, moreover, different services, which enlarge up to 15 terminals which do not need to be synchronized, since the access is unique, representing a bus unity of access-equipment of 2MB (2048 Kbit/s).

Also, some equipments with unities of basic access to DNIS have been marketed, so reducing the price of the service, but maintaining the links unity of access equipment independent to each external link, so that each retains its timing, complicating the equipment and being incompatible with the equipments fitted with unities of primary access containing a bus of 2 MB or 2 megabits, as above mentioned.

So, at present, there are no unities of access to DNIS which may be indistinctly configured as unities of primary or basic access, without any need to carry out modifications in the equipment configuration where they are installed, since for it it is necessary to multiplex said "B" channels of the basic access in only link unity of access-equipment at 2048 Kbit/s, with an only timing.

In consequence, it is proved the existence of a great difficulty to carry out the sought multiplexing.

In order to obtain this only link -unity of access- equipment, the timing of said link must be referenced with one of the external basic access, but if this external basic link is lost owing to any reason (that is to say, the user hangs, there is a physical breaking of the pair, there are problems at the telephone exchange, etc.), the only link clock at 2048 Kbit/s remains synchronized with regard to the line timing of the remaining external links, with the resulting loss of data in the multiplexing operation, which means the end of the multimedia multipoint conference.

In accordance with that above exposed, it would be suitable to rely on an invention which could permit that, for the time during which a multimedia conference by six different persons is held, these persons being physically located in different countries, if the above mentioned anomalies are produced, that is to say: the user hangs up, there is a physical breaking of the pair, there are problems at the telephone exchange, etc., the person whose connection has been taken as a reference of timing, could permet the rest of the participants to vissualize and listen the conference.

Nevertheless, up to now, nothing is known about the existence of an invention fitted with the characteristics consider as suitables.

### SUMMARY OF THE INVENTION

The unity of basic access to a digital network of integrated services as proposed by the invention, constitutes per se an evident novelty within the specific field of application, solving in a total and complete manner the above mentioned problems.

In a most definite way, the unity of basic access to a digital network of integrated services of the invention, is constituted starting from the realization of the timing of an only link, unity of access-equipment (2048 Kbit/s), this timing generating the unity starting from the timing of one of the basic access by means of a digital PLL (Phase Locked Loop) implemented in a LCA (Logic Cell Array).

In consequence, the data clock of the link-unity of access-equipment is derived from the data clock of one of the external basic access, such as already mentioned above.

In accordance with the invention, the status of the calling of the access being used as reference is monitored every moment, in order to derive the link clock at 2048 Kbit/s unity of access-equipment, and said monitoring is carried out by using the flag information of channel D, which is configured like a channel which, in a primary basic access of DNIS, carries mainly a flag at 16 Kbit/s and at 64 Kbit/s, the channel "B" carrying a flag between user and public telefone exchange where it is processed to be transfered by the rest of the public network, allowing the channel "D" to know the status of the basic access at any time.

If this call disappears, it is switched to other access active, and said PLL is configured with a "hanging up" time sufficiently fast to avoid data losses at the moment of switching the reference from an access to other access.

In the mentioned way, a multiplexing is obtained allowing the multimedia multipoint equipment "to see" a bus of 2048 Kbit/s, and not to distinguish if the access to DNIS is either primary or basic, so being possible to replace la unity of primary access by the unity of basic access, without performing any additional modification to the equipment.

### DESCRIPTION OF DRAWINGS

In order to complement this description and aid to a better understanding of the characteristics of the invention, the appending three sheets of drawings, which are a part of this specification, show, by way of illustrative and non-limiting example, the following figures:
Figure 1 corresponds to a block diagram of the general structure of the unity of basic access to a digital network of integrated services of the invention.
Figure 2 shows also a block diagram of the contents of the LCA's (Logic Cell Array) incorporated in the - structure represented in figure 1.
Figure 3 shows, lastly, the internal structure of a block S, that is to say, of the blocks performing the conversion of bus IOM (256 Kbit/s) to bus C1 (2048 Kbit/s.).

### PREFERRED EMBODIMENT OF THE INVENTION

From the appending figures, it can be seen that the unity of basic access to a digital network of integrated services in a preferred embodiment, allows a multimedia multipoint conference equipment with primary access (conferences up to 15 terminals), or with basic access (conferences up to 6 terminals) to be configured, by performing the multiplexing of the 12 channels "B" in a link at 2048 Kbit/s (leaving empty 18 channels of the bus).

The preferred embodiment implements both drivers and connectors, as well as the relative interface (in a LCA, that is to say: Logic Cell Array), for a VME bus or interface which generates control signals or flags to the DPRAM block or RAM memory of dual port, for the communication according to the VME interface, since it is an customary bus in the multimedia multipoint conference equipments, but it can be used in any other equipment requiring a multiaccess to the DNIS, and involving other type of bus, only replacing said elements.

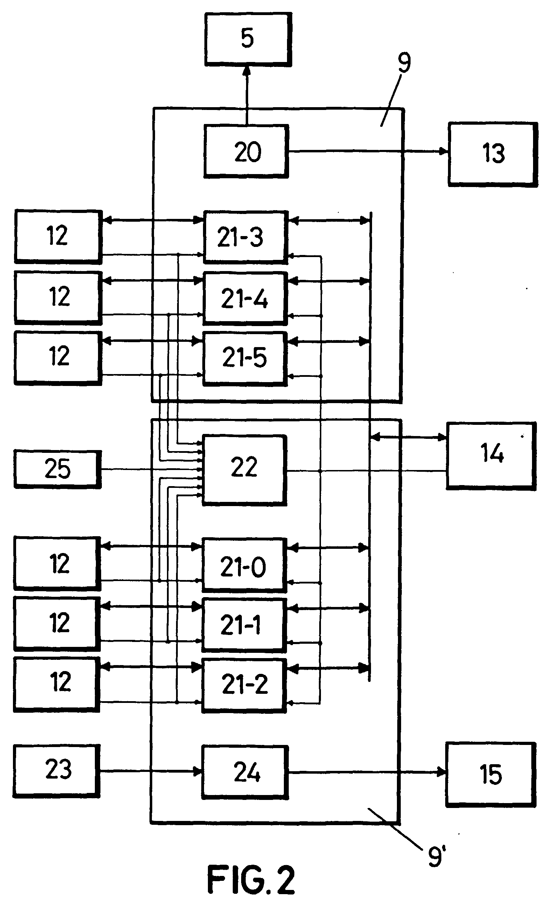

Following the figure 2, which represents the general structure of the unity of access of the invention, it can be seen that it is formed starting from line circuits (1), performing the external connection of the unity, and several ISAC's, that is to say, access circuits of interface "S" or user's interface of the DNIS; to sump up, the configuration of the user of the basic access being achieved, in practice, by means of a passive bus to connect up to 8 terminals, the bidirectional bus being at 192 Kbit/s, and being constituted by four wires to carry out unions, and four complementary wires for telefeeding, which correspond with the 8 pins connector (RJ 45), these circuits implementing the physical level protocols, as well as the HDLC (High Level Data Link Control) treatment, consisting of a procedure for controlling, with certainty, processes to transfer data, from channel "D" configured as a channel that, in a primary or basic access of DNIS, transfers mainly a flag at 16 Kbit/s and at 64 Kbit/s, extracting both channels "B" containing useful information at 64 Kbit/s from each access toward an IOM bus, or bus at 256 Kbit/s.

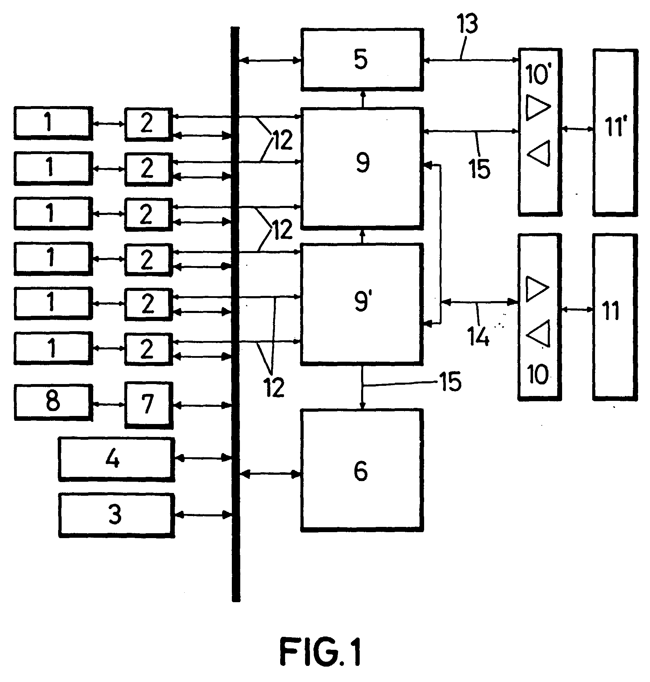

Following with the figure 1, one can see the existence of a static RAM memory (3) of up to 256 Kbytes, as well as an EPROM memory (Erasable Programmable Read Only Memory) (4), of 256 Kbit/s, which can be erased by the action of ultraviolet light, having a DPRAM memory (5) or dual port RAM memory to communicate according to the VME interface, relying on a microprocessor (5), to be exact an INTEL 80C188 microprocessor, a unity to implement the series UART port, that is to say, an Asynchronous Unity of Data Reception and Transmission, incorporating a driver (8), to be exact, a RS-232 driver, controller of series port.

Said figure 1 shows the existence of a LCA1 (9), and a LCA2 (9'), the LCA1 (9) performing the VME interface and the conversion of the IOM bus of accesses (3), (4) and (5) to bus C1.

LCA2 (9') performs the synthesis of the control - clocks, as well as the control logic of microprocessor (6), , and the conversion of IOM bus of the accesses 0, 1 and 2 to bus C1 (bus at 2048 Mbit/s).

Lastly, this same figure shows the existence of two drivers or controllers (10) and (10') for connectors VME (11) and (11') (P1 and P2).

The IOM buses have been referenced (12).

Following the figure 2, which represents a block diagram of the content of LCA 1 and LCA 2, under references (9) and (9') respectively, it shows, within LCA1 (9), the presence of a VME interface (20), generating control flags for the DPRAM block (5), and the VME bus (13) shown in figure 1.

Likewise, within LCA1 (9), there are two blocks S (21-3), (21-4) and (21-5), which perform the conversion of IOM bus (12) (256 Kbit/s) to C1 bus (14) (2048 Kbit/s)

Within LCA2 (9'), there are blocks S (21-0), (21-1) and (21-2), similar, as regards application and configuration, to those existing in LCA1 (9).

Also in LCA2 (9'), there is a PLL block or Clocks and Control, forming a block which generates the clocks of C1 bus (14), synchronized with the clock of IOM bus (12), selected from the microprocessor (6), generating also the clock and the control flags of the access to C1 bus (14) of the blocks S (21-0), (21-1) and (21-2), PLL being referenced (22).

Also in LCA2 (9'), there is placed a block (24), constituted like a Glue Logic 80C188, or auxiliary logic block to control the bus (23), the reset generation and the clock of microprocessor (15).

It is to be noted that the block (22) is connected to the block (25), constitutive of the local clock of reference, with 32.768 MHz.

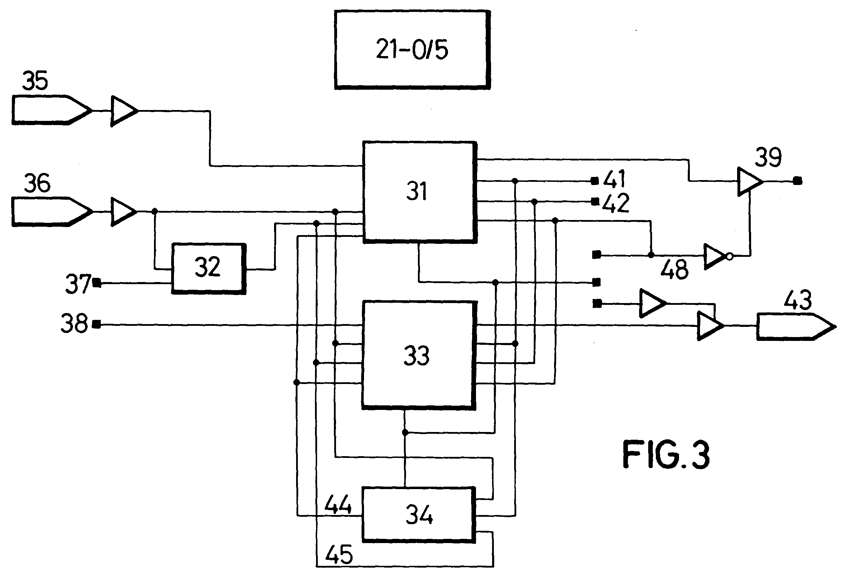

The figure 3 shows the internal structure of blocks S (21-0/5), constituted by an input synchronizing block (31), a clock divider block at 512 KHz→256 KHz (32), an output synchronizing block (33), an edge switching block (34), a data input at 256 Kbit/s (35), a trame clock at 512 KHx (dual bit rate) (36), a reference clock at 512 KHz (37), a data input at 2 MB (38), a data output at 2 MB (39), a control signal for inserting channels (12 over 30) (40), as well as a trame clock at 2 MB (41), and a data clock at 2 MB (42).

Also, it has a data output at 256 Kbit/s (43), an edge selecting signal for synchronizing data (44), and a clock (45) at 257 KHz, obtained at the divider block of clock (32).

The blocks S (21-0/5) are composed, in synthesis, of an input synchronizer (31) and an output synchronizer (33), performing a conversion by means of two shift registers of 16 bits at 256 khz (input and ouput of IOM bus (12)), and also of two shift registers of 16 bits input and output of C1 bus(14)), presenting two register of 16 bits for buffer between each pair of shift registers (internal elements to the mentioned blocks), and lastly an edge switch (34) having, inside, an integrator and comparator to determine, as a function of the difference of phase between the IOM clocks (12) and the C1 clocks (14), the load time of the mentioned buffer registers.

According to that above mentioned, the conversion of IOM bus (12) (256 Kbit/s) to C1 bus (14) (2048 Kbit/s) is achieved, as already pointed out.

It is not considered necessary to extend this description for any expert in the art to understand the scope of the invention and the advantages derived from it.

The materials, shape, size and arrangement of the components will be open to variation, provided that it does not imply any alteration to the essence of the invention.

The terms under which this specification has been described should be always taken in an ample and non-limitative sense.

## Claims

1. A unity of basic access to a digital network of integrated services, characterized in that it is constuted starting from a structure composed of several line circuits (1), performing an external connection of the unit, presenting ISAC access circuits (2), a RAM memory (3) configured like a static memory of up to 256 Kbit/s, an EPROM memory (4) of 256 Kbit/s, as well as a DPRAM memory (5), or dual port RAM memory, presenting a microprocessor (6) INTEL 80C188, a unity (7) for implementing the series port, a RS-232 driver (8), controlling the series port, two LCA1 and LCA2 (9) and (9'), two controllers (10) and (10') for connectors (11) and (11').

2. A unity of basic access to a digital network of integrated services, according to claim 1, characterized in that the ISAC access circuits implement the physical level protocols, as well as the HDLC treatment of channel D, extracting the channels B from each access towards a IOM bus or bus at 256 Kbit/s.

3. A unity of basic access to a digital network of integrated services, according to claim 1, characterized in that LCA (9) performs the VME interface and the IOM conversion of accesses (21-3), (21-4) and (21-5) to a C1 bus (14).

4. A unity of basic access to a digital network of integrated services, according to claim 1, characterized in that LCA2 (9') performs the synthesis of control clocks, the control logic of the microprosessor, as well as the IOM bus conversion (12) of accesses - (21-0), (21-1) and (21-2), to C1 bus (14), or bus at 2048 Mbit/s.

5. A unity of basic access to a digital network of integrated services, according to claim 1, characterized in that within LCA1 (9) there is a VNE interface (20) generating the control flags for the DPRAM block (5) and the VME bus (13), having also three blocks S (21-3), (21-4) and (21-5), performing the conversion of IOM bus (12) (256 Kbit/s) to C1 bus (14) (2048 Kbit/s).

6. A unity of basic access to a digital network of integrated services, according to claim 1, characterized in that within LCA2 (9') there are three blocks S (21-0), (21-1) and (21-2) performing the conversion of IOM bus (12) (256 Kbit/s) to C1 (14) (2048 Kbit/s), presenting also a PLL block (22) which genererates the C1 bus clocks (14), synchronized with the IOM bus - clock generated from the microprocessor, generating the clock and the control flags of access to C1 bus (14) of blocks S.

7. A unity of basic access to a digital network of integrated services, according to claims 1 and 6, - characterized in that LCA2 (9') is fitted with an auxiliary logic block (24) connected to CTRL (15) and to a control and data address bus (23), performing the bus control, the reset generation and the microprocessor clock (15).

8. A unity of basic access to a digital network of integrated services, according to claim 1, characterized in that the internal structure of blocks S (21-0/5) is constituted of a input syncronizing block (31), a clock divider block (32), an output synchronizing - block (33), an edge switching block (34), a data input at 256 Kbit/s (35), a trame clock at 512 KHz (36), a reference clock (37) at 512 KHz, a data input (38) at 2 MB, and a data output at 2 MB (39).

9. A unity of basic access to a digital network of integrated services, according to claims 1 and 8, characterized in that the internal structure of blocks S (21-0/5) is fitted with a control flag for insertion of channels (40), a trame clock (41) at 2 MB, a data clock (42) at 2 MB, a data output (43) at 256 Kbit/s, an edge selecting flag (44) for data synchronizing, and a clock (45) at 256 KHz obtained in the divider block (32).

10. A unity of basic access to a digital network of integrated services, according to claims 1, 8 and 9, characterized in that the blocks S (21-0/5) are composed of an input synchronizer (31) and an output synchronizer (33), performing a conversion by means of two shift registers of 16 bits at 256 khz (input and output of IOM bus (12)), relying on two shift registers of 16 bits (input and output of C1 bus (14)), having two registers of 16 bits for buffer between each pair of shift registers, and presenting an edge switch (34), fitted inside with an integrator and comparator to determine, according to the difference of phase between le IOM (12) and C1 (14) clocks, the load time of mentioned buffer registers.

11. A unity of basic access to a digital network of integrated services, according to the preceding claims, characterized in that the timing of the only link, unity of access-equipment (2048 Kbit/s) is generated by the unity starting from the timing of any access of of those basic ones by means of a digital PLL implemented in a LCA1 or 2 (9) and (9'), the data clock of the link, unity of access-equipment being derived of the data clock of some of the external basic access.

12. A unity of basic access to a digital network of integrated services, according to the preceding - claims, characterized in that the status of the call of access being used as reference to derive the link clock at 2048 kbit/s, unity of access-equipment, is monitored every moment, by the use of the flag information from channel D, allowing the status of the basic access to be known at any moment.

13. A unity of basic access to a digital network of integrsted services, according to claims 1 and 12, characterized in that if the call disappears, it is switched to other active access, the PLL being configured with a hanging up time sufficiently fast to - avoid losses of data when switching the reference from an access to other access.
